# EUROPÄISCHE PATENTSCHRIFT

(11) **EP 2 706 499 B1**
(45) Veröffentlichungstag und Bekanntmachung des Hinweises auf die Patenterteilung: **15.03.2017**
(21) Anmeldenummer: 13150452.4
(22) Anmeldetag: 08.01.2013
(51) Int. Cl.: G06Q 30/06

(54) **PRODUKTKATALOG, VERFAHREN ZUM AUTOMATISCHEN BESTELLEN VON IN EINEM PRODUKTKATALOG DARGESTELLTEN PRODUKTEN UND COMPUTERPROGRAMMPRODUKT DAFÜR**
PRODUCT CATALOGUE, METHOD FOR THE AUTOMATIC ORDERING PRODUCTS ILLUSTRATED IN A PRODUCT CATALOGUE AND A COMPUTER PROGRAM PRODUCT FOR THIS PURPOSE
CATALOGUE DE PRODUITS, PROCÉDÉ DE COMMANDE AUTOMATIQUE DE PRODUITS REPRÉSENTÉS DANS UN CATALOGUE DE PRODUITS ET PRODUIT DE PROGRAMME INFORMATIQUE À CET EFFET

(30) Priorität: 05.09.2012 DE 102012108223
(43) Veröffentlichungstag der Anmeldung: 12.03.2014
(73) Patentinhaber: Cadenas GmbH, 86153 Augsburg (DE)
(72) Erfinder: Heimbach, Jürgen, 86152 Augsburg (DE)
(74) Vertreter: Charrier Rapp & Liebau

(56) Entgegenhaltungen:
- DE-A1- 19 953 719
- DE-A1-102006 024 824
- JP-A- 2012 014 511
- US-A1- 2005 015 310
- ANONYMOUS: 'TECHNISCHES PRODUKTDATENBLATT Motorola DS9208 MOTOROLA DS9208', [Online] 01 Januar 2010, XP055108317 Gefunden im Internet: <URL:http://www.servopack.de/Files/DB/motor ola-ds9208.pdf> [gefunden am 2014-03-17]
- "Defekte Barcodes kein Problem", Technische Rundschau 3/2011, 1 January 2011 (2011-01-01), page 65, XP055108318, Retrieved from the Internet: URL:http://www.technische-rundschau.ch/dlC enter/tr/2011_3/TR0311_65.pdf [retrieved on 2014-03-17]
- ANONYMOUS: 'Why use a Grabba?', [Online] 01 Januar 2010, XP055108345 Gefunden im Internet: <URL:http://www.pksservices.co.uk/pdfs/Grab ba_S-Series_for_iPhone.pdf> [gefunden am 2014-03-17]

## Beschreibung

Die Erfindung betrifft einen Produktkatalog mit den Merkmalen des Oberbegriffs des Anspruchs 1. Die Erfindung betrifft ferner ein Verfahren zum automatischen Bestellen von in einem Produktkatalog dargestellten Produkten durch einen Benutzer und ein Verfahren zum automatischen Bestellen und Übermitteln von zeichnerischen oder virtuellen Darstellungen von in einem Produktkatalog dargestellten Bauteilen. Die Erfindung bezieht sich auch auf ein Computerprogrammprodukt zum automatisierten Ausführen dieser Verfahren.

Aus dem Stand der Technik sind Verfahren zum automatisierten Bestellen von Produkten bekannt, welche in Produktkatalogen dargestellt sind. So zeigt beispielsweise die DE 10 2006 024 824 A1 ein Verfahren zum Bestellen eines Produktes bei einem Versandhandel, wobei der Besteller dem Versandhändler über einen definierten Datenkanal Abbildungen der zu bestellenden Produkte und textliche Absenderinformationen schickt, die ihn als Besteller identifizieren. Die Abbildungen und Absenderinformationen können vom Versandhändler weitgehend automatisch verarbeitet werden. Der Versandhändler kann beispielsweise die Absenderinformationen automatisch mit einer Kundendatenbank abgleichen, um den Kunden zu identifizieren und die vom Kunden übermittelte Abbildung kann mit einer Produktinformationen-Datenbank abgeglichen werden, um das bestellte Produkt zu identifizieren. Die Übermittlung der Daten des Kunden und der Abbildungen der zu bestellenden Produkte erfolgt hierbei über ein elektronisches Medium, beispielsweise das Internet oder ein Mobilfunknetz. Nachteilig bei diesem Verfahren ist, dass der Kunde seine Absenderinformationen zusammen mit den Abbildungen der ausgewählten Produkte manuell in ein elektronisches Nachrichtenübermittlungssystem, beispielsweise ein System zum Versenden von E-Mails, eingeben muss. Dies ist zeitaufwändig und fehleranfällig.

Aus der US 2005/015 310 ist ein Verfahren bekannt, mit dem Bestellungen von verschiedenen Kunden aus verschiedenen Produktkatalogen bearbeitet werden können. Die Produktkataloge beinhalten dabei Informationen zu den Produkten des jeweiligen Herstellers, wobei die Darstellung der Informationen maschinenlesbare Produktcodes umfasst, welche Informationen zu dem Produkt enthalten. Neben diesen Produktcodes können auch maschinenlesbare Herstellercodes auf den jeweiligen Produktkatalogen angebracht sein. Ein derartiges Verfahren eignet sich besonders für Dienstleister im Bereich des E-Commerce, bei denen Produkte von einer großen Anzahl unterschiedlicher Hersteller angeboten werden. Um eine Bestellung eines Kunden zu erstellen, werden zuerst die betreffenden Kundendaten mittels einer Barcodes eingescannt. Anschließend werden der jeweilige Herstellercode und danach die gewünschten Produkte des Herstellers von dem Dienstleister eingelesen. Die derart erstellte Bestellung wird zusammen mit in einer Softwareanwendung hinterlegten Informationen zu dem Dienstleister an die verschiedenen Hersteller versendet. Ein derartiges Verfahren eignet sich aufgrund der Komplexität jedoch nur für Anwender, die eine große Anzahl von Bestellvorgängen unterschiedlicher Kunden an unterschiedliche Hersteller durchführen. Für einen einzelnen Kunden mit einer geringen Anzahl an Bestellvorgängen würde ein derartiges Verfahren jedoch keine Hilfe darstellen.

Aus der DE 299 12 233 U1 ist eine Vorrichtung und ein Verfahren zur Abwicklung von Bestellungen aus einem Bestellkatalog bekannt, wobei den darin aufgeführten Waren maschinenlesbare Bestelldaten zugeordnet sind. Die maschinenlesbaren Daten sind beispielsweise in Form eines Strichcodes in dem Bestellkatalog enthalten und den einzelnen Waren zugeordnet. Die maschinenlesbaren Bestelldaten werden mit einer geeigneten Leseeinrichtung ausgelesen und über eine Übertragungseinheit an einen entfernten Rechner übertragen. Dabei erfolgt auch eine Übertragung von für den Besteller (Endverbraucher) spezifischen Daten. Diese sind in der Übertragungseinheit gespeichert und enthalten beispielsweise den Namen und die Adresse des Bestellers (Kunden) und werden bei jeder Bestellung an den entfernten Rechner zusammen mit den mittels der Leseeinrichtung ausgelesenen Bestelldaten übermittelt. Für die gleichzeitige Übermittlung der Bestelldaten des zu bestellenden Produkts und der spezifischen Daten des Bestellers (Kunden) ist es allerdings für jede Bestellung erforderlich, die Übertragungseinheit zu verwenden, in der die kundenspezifischen Daten gespeichert sind, und diese mit der Leseeinrichtung zu koppeln, mit der die maschinenlesbaren Bestelldaten des zu bestellenden Produkts ausgelesen worden sind. Dies erfordert einen erheblichen gerätetechnischen Aufwand.

Hiervon ausgehend liegt der Erfindung die Aufgabe zugrunde, einen Produktkatalog sowie Verfahren zum automatischen Bestellen von in einem Produktkatalog dargestellten Produkten aufzuzeigen, mit denen ein Benutzer auf möglichst einfache, wenig fehleranfällige und zeitsparende Weise die in dem Produktkatalog dargestellten Produkte bestellen kann. Eine Aufgabe der Erfindung besteht ferner darin, ein Computerprogrammprodukt bereitzustellen, mit dem ein automatisiertes Verfahren zum Bestellen von in einem Produktkatalog dargestellten Produkten ermöglicht wird.

Diese Aufgaben werden mit einem Produktkatalog mit den Merkmalen des Anspruchs 1, mit den Verfahren mit den Merkmalen der Ansprüche 8 und 9 sowie mit einem Computerprogrammprodukt mit den Merkmalen des Anspruchs 15 gelöst. Bevorzugte Ausführungsformen des Produktkatalogs sind in den abhängigen Ansprüchen 2 bis 7 angegeben und die abhängigen Ansprüche 10 bis 14 enthalten bevorzugte Ausführungsformen der Verfahren.

Der erfindungsgemäße gedruckte Produktkatalog enthält eine Sammlung von Informationen zu Produkten (Waren und/oder Dienstleistungen), wobei die Darstellung der Informationen zumindest für einzelne in dem Produktkatalog enthaltene Produkte einen maschinenlesbaren Produktcode umfasst, der Informationen (Produktinformationen) zu dem Produkt enthält. Zweckmäßig enthalten die Darstellungen aller in dem Produktkatalog aufgeführten Produkte einen solchen maschinenlesbaren Produktcode. Dies ist jedoch nicht zwingend erforderlich, d.h. es können in dem Produktkatalog auch einzelne Produkte enthalten sein, denen kein maschinenlesbarer Produktcode zugeordnet ist. Bei den in dem Produktcode enthaltenen Produktinformationen zu dem zugeordneten Produkt kann es sich beispielsweise um eine Produktbezeichnung, eine Bestell- oder Artikelnummer, den Preis, die Lieferzeit oder andere produktspezifische Informationen handeln. Zweckmäßig enthält der Produktcode solche Informationen zu dem ihm zugeordneten Produkt, welche eine eindeutige Identifizierung des Produkts ermöglichen, ggf. durch Rückgriff auf eine Produktinformationen-Datenbank, die bei einem Lieferanten des Produkts, bei dem dieses bestellt werden kann, hinterlegt ist. Der erfindungsgemäße Produktkatalog zeichnet sich dadurch aus, dass in oder an dem Produktkatalog wenigstens ein maschinenlesbares Identifikationsmittel mit individuellen Daten eines Benutzers des Produktkatalogs zur Identifizierung des Benutzers angeordnet ist. Das maschinenlesbare Identifikationsmittel enthält individuelle Daten eines Benutzers des Produktkatalogs (Benutzerinformationen), die zweckmäßig eine eindeutige Identifizierung des Benutzers ermöglichen. Bei dem Identifikationsmittel kann es sich bspw. um einen maschinenlesbaren Benutzercode oder um eine Visitenkarte des Benutzers handeln. Das Identifikationsmittel, also bspw. der maschinenlesbare Benutzercode oder die Visitenkarte, ist dabei auf einer ausklappbaren Lasche (5) aufgedruckt oder daran befestigt, welche so in oder an dem Produktkatalog (1) angeordnet ist, dass das Identifikationsmittel (4) bei ausgeklappter Lasche (5) in Bezug auf die in dem Produktkatalog enthaltenen Produktcodes so angeordnet, dass das Identifikationsmittel zusammen mit wenigstens einem Produktcode von einem geeigneten Lesegerät gleichzeitig ausgelesen werden kann. Bei den Benutzerinformationen, die in dem Identifikationsmittel enthalten sind, kann es sich beispielsweise um den Namen und die Adresse des Benutzers handeln. Besonders zweckmäßig ist es, wenn im Identifikationsmittel eine e-mail-Adresse des Benutzers enthalten ist. Im Identifikationsmittel können auch (nur) eine e-mail-Adresse des Benutzers oder eine Kundennummer oder andere Angaben enthalten sein, die eine eindeutige Identifizierung des Benutzers ermöglichen, ggf. durch Rückgriff auf eine bei einem Lieferanten hinterlegte Datenbank, bei dem das zu bestellende Produkt bestellt werden kann. Weitere benutzerspezifische Daten, die in dem Identifikationsmittel enthalten sind, können beispielsweise eine Rechnungsadresse, eine Bankverbindung zur Einziehung des Kaufpreises für das bestellte Produkt oder entsprechende Kreditkartendaten hierfür, spezifische Bestellkonditionen wie z.B. Rabatte, Bonusdaten oder dergleichen sein. Das Identifikationsmittel kann darüber hinaus auch Konfigurationsdaten zu der IT-Umgebung des Benutzers umfassen, wie z.B. Konfigurationsdaten zu Datenverarbeitungsprogrammen, mit denen der Benutzer arbeitet. Die in dem Identifikationsmittel enthaltenen Benutzerinformationen können dort in Textform oder in Form eines maschinenlesbaren Codes, bspw. eines ein- oder zweidimensionalen Barcodes, insbesondere in Form eines QR-Codes, enthalten sein.

Durch die Anordnung des Identifikationsmittel in oder an dem Produktkatalog in der Weise, dass dieses zusammen mit wenigstens einem der in dem Produktkatalog dargestellten Produktcodes von einem Lesegerät gleichzeitig ausgelesen werden kann, ermöglicht der erfindungsgemäße Produktkatalog eine effiziente und gleichzeitige Erfassung der Daten zu dem zu bestellenden Produkt (Produktinformationen) und dem Benutzer (Benutzerinformationen), der die Bestellung aufgibt. Zur Aufgabe einer Bestellung muss der Benutzer zunächst nur ein gewünschtes Produkt in dem Produktkatalog auswählen und die Katalogseite öffnen, in der das ausgewählte Produkt zusammen mit dem ihm zugeordneten Produktcode dargestellt ist. Der Benutzer kann dann gleichzeitig den Produktcode des ausgewählten Produkts zusammen mit dem Identifikationsmittel mit einem geeigneten Lesegerät auslesen. Unter gleichzeitig wird hierbei verstanden, dass das Auslesen des Identifikationsmittels und des Produktcodes in einem einzigen Scanvorgang erfolgt, in dem die Daten des Identifikationsmittels und des Produktcodes ausgelesen und anschließend decodiert werden. Das Lesegerät ist zweckmäßig so eingerichtet, dass es den maschinenlesbaren Produktcode und das Identifikationsmittel gleichzeitig auslesen und anschließend decodieren und/oder in ein elektronisches Datenformat umwandeln kann. Wenn es sich bei dem Identifikationsmittel bspw. um eine Visitenkarte handelt, welche die Benutzerdaten in Textform enthält, ist das Lesegerät zum Einlesen des in bzw. auf dem Identifikationsmittel enthaltenen Texts und zur Texterkennung ("*Optical Character Recognition",* OCR) sowie Umwandlung des erfassten Texts in ein elektronisches Textformat eingerichtet. Das Lesegerät ist zweckmäßig mit einer Datenverarbeitungseinrichtung gekoppelt, welche die ausgelesenen Daten des Produktcodes und des Identifikationsmittels verarbeitet und insbesondere decodiert und/oder in ein elektronisches Datenformat umwandelt, um daraus eine Bestellung zu erzeugen, welche die Daten des Produktcodes (Produktinformationen) und des Identifikationsmittels (Benutzerinformationen) enthält. Diese Bestellung, welche zweckmäßig mittels einer Datenverbindung an einen Anbieter des ausgewählten Produkts übermittelt wird, enthält dadurch alle für die Bestellung erforderlichen Daten, insbesondere die Identifikation des bestellten Produkts und des Benutzers, der das Produkt bestellt.

In einem bevorzugten Ausführungsbeispiel der Erfindung handelt es sich sowohl bei dem Produktcode als auch bei dem Identifikationsmittel um einen maschinenlesbaren Code, insbesondere um einen QR-Code. Das Identifikationsmittel umfasst dabei also einen maschinenlesbaren Benutzercode, der die Daten zur Identifizierung des Benutzers in verschlüsselter Form enthält.

Ein Aspekt der Erfindung, der unabhängig von den übrigen Aspekten der Erfindung verwendet werden kann und insofern als eigenständige Erfindung angesehen wird, betrifft daher auch ein Verfahren zum gleichzeitigen Auslesen und Verarbeiten von maschinenlesbaren Codes, insbesondere Barcodes oder QR-Codes, und/oder eines Codes und eines Texts, wobei in einem ersten Schritt wenigstens zwei benachbart zueinander angeordnete maschinenlesbare Codes oder ein maschinenlesbarer Code und ein Text gleichzeitig, d.h. in einem Leseschritt bzw. in einem Scanvorgang, mittels eines Lesegeräts ausgelesen werden und die ausgelesenen Daten der Codes bzw. des Codes und des Texts in einem zweiten Schritt mittels einer Datenverarbeitungseinrichtung decodiert und weiter verarbeitet werden. Für eine Anwendung eines solchen Verfahrens zum gleichzeitigen Auslesen und Verarbeiten von maschinenlesbaren Codes und ggf. eines Texts in den erfindungsgemäßen Verfahren zur automatischen Erzeugung einer Bestellung ist dabei vorgesehen, dass die ausgelesenen Daten der Codes bzw. des Texts beim Verarbeiten zur Erzeugung eines kombinierten Datensatzes miteinander verknüpft bzw. kombiniert werden. Dieses Verfahren zum Einlesen und Verarbeiten von maschinenlesbaren Codes bzw. eines Codes und eines Texts kann in den erfindungsgemäßen Verfahren zur automatischen Erzeugung einer Bestellung verwendet werden, indem dort der Produktcode und der Benutzercode bzw. der Produktcode und das in Textform vorliegende Identifikationsmittel gleichzeitig ausgelesen und die ausgelesenen und decodierten Daten der beiden Codes anschließend zur Erzeugung eines Bestell-Datensatzes, der die Daten des Produktcodes und des Benutzercodes bzw. des Identifikationsmittels enthält, miteinander verknüpft werden.

Bei dem Produktcode und ggf. bei dem maschinenlesbaren Benutzercode kann es sich um einen (eindimensionalen) Barcode oder um einen zweidimensionalen Code und insbesondere um QR-Codes, einschließlich Design-QR-Codes, Micro-QR-Codes, Secure-QR-Codes (SQRC) oder iQR-Codes handeln. Es können jedoch auch andere Arten von maschinenlesbaren Codes zur Anwendung kommen, wie z.B. Data-Matrix-Codes, farbige Codes wie z.B. "High Capacity Color Barcodes (HCCB)" oder "Touch-Codes" wie sie beispielsweise aus der DE 20 2010 011 032 U1 bekannt sind.

Bei dem Produktkatalog handelt es sich um ein Druckerzeugnis in Form eines gedruckten Katalogs, einer Produktbroschüre, einem Produktflyer oder dergleichen. Das Identifikationsmittel ist dabei auf einer ausklappbaren Lasche aufgebracht und insbesondere aufgedruckt, welche so in oder an dem Druckerzeugnis (gedruckter Produktkatalog) angeordnet ist, dass der Benutzercode bei ausgeklappter Lasche zusammen mit wenigstens einem Produktcode, der in dem Produktkatalog einem darin enthaltenen Produkt zugeordnet und dort abgedruckt ist, mittels eines Lesegeräts auslesbar ist. In einer besonders zweckmäßigen Ausführungsform weist das Druckerzeugnis einen Einband mit einem Einbanddeckel auf und die ausklappbare Lasche mit dem aufgebrachten Identifikationsmittel ist an dem Einbanddeckel befestigt, beispielsweise verklebt. Besonders vorteilhaft ist es, wenn die ausklappbare Lasche verschiebbar an dem Einbanddeckel befestigt ist. Es ist dann möglich, durch Verschieben der Lasche das darauf aufgebrachte bzw. aufgedruckte Identifikationsmittel so anzuordnen, dass es bei einer aufgeschlagenen Seite des Druckerzeugnisses (Produktkatalog) direkt neben dem Produktcode eines ausgewählten Produkts zu liegen kommt. Dies ermöglicht eine gleichzeitige Auslesung sowohl des Produktcodes als auch des daneben angeordneten Identifikationsmittels in einem einzigen Leseschritt (Scanvorgang) durch ein geeignetes Lesegerät. Die Verschiebbarkeit der Lasche mit dem aufgebrachten bzw. aufgedruckten Identifikationsmittel kann beispielsweise über einen verschiebbar am Einbanddeckel angeordneten Reiter oder eine am Einbanddeckel des Druckerzeugnisses angeordnete Tasche ermöglicht werden, in welche die Lasche mit dem aufgebrachten Identifikationsmittel verschiebbar eingelegt wird. Eine magnetische Befestigung der Lasche am Einbanddeckel oder eine Befestigung mittels eines Klettverschlusses ist ebenfalls möglich.

Der erfindungsgemäße Produktkatalog eignet sich zum Bestellen aller Arten von Produkten, also insbesondere Waren oder Dienstleistungen, die in herkömmlichen Produktkatalogen dargestellt werden können, wie z.B. Bekleidungsstücke, Spiel- und Sportwaren, Fahrzeugteile- und -zubehör, Elektroartikel, Werkzeuge, Möbel und Einrichtungsgegenstände, Pauschalreisen, etc.. Der erfindungsgemäße Produktkatalog eignet sich insbesondere auch zum Bestellen und Übermitteln von zeichnerischen oder virtuellen Darstellungen und insbesondere von CAD-Zeichnungen von in dem Produktkatalog dargestellten Produkten. Bei der Konstruktion mechanischer Bauteile oder der Entwicklung von elektronischen Schaltungen werden üblicherweise rechnerunterstützte Konstruktionsverfahren ("computer-aided design", CAD) eingesetzt, wobei zwei- oder dreidimensionale Zeichnungen der verwendeten Bauteile bzw. virtuelle (elektronische) Darstellungen der Bauteile verwendet werden. Zur Erstellung mechanischer Konstruktionen oder elektronischer Schaltungen kann ein Konstrukteur bspw. ein reell verfügbares Bauteil aus einem Produktkatalog auswählen und zur Erstellung einer CAD-Konstruktion eine CAD-Zeichnung des ausgewählten Bauteils beim Bauteillieferanten bestellen, um diese CAD-Zeichnung bzw. virtuelle Darstellung des Bauteils in seine CAD-Konstruktion einzubinden. Der erfindungsgemäße Produktkatalog ermöglicht es nun, zeichnerische oder virtuelle Darstellungen von Bauteilen, insbesondere CAD-Zeichnungen, von in einem Produktkatalog dargestellten Bauteilen auf effiziente Weise und mittels eines automatisierten Verfahrens bei einem Bauteillieferanten zu bestellen und an den Benutzer zu übermitteln. Wie bei der Bestellung eines in dem Produktkatalog dargestellten Produkts wählt der Benutzer hierbei ein gewünschtes Bauteil aus, welches in dem Produktkatalog dargestellt ist und dem ein maschinenlesbarer Produktcode zugeordnet ist. Der Benutzer schlägt dann die entsprechende Seite des Produktkatalogs auf, in dem das ausgewählte Bauteil mit dem zugeordneten Produktcode dargestellt ist und liest mittels eines geeigneten Lesegeräts gleichzeitig sowohl den Produktcode des ausgewählten Bauteils als auch sein bevorzugt daneben angeordnetes Identifikationsmittel aus, um eine Bestellung einer zeichnerischen oder virtuellen Darstellung des ausgewählten Bauteils zu generieren. Die Bestellung wird zweckmäßig in einem automatisierten Verfahren erzeugt und bevorzugt in elektronischer Form an den Lieferanten übermittelt. Dieser übersendet dann die zeichnerische oder virtuelle Darstellung des ausgewählten Bauteils zweckmäßig auf elektronischem Wege über eine Datenverbindung an den Benutzer.

Bei diesem Ausführungsbeispiel eines erfindungsgemäßen Verfahrens zum automatischen Bestellen und Übermitteln von zeichnerischen oder virtuellen Darstellungen eines ausgewählten Produkts (Bauteils) ist es besonders zweckmäßig, wenn in dem Identifikationsmittel spezifische Daten zur IT-Umgebung des Benutzers enthalten sind, wie z.B. die Bezeichnung, die Version und die Konfiguration eines von ihm verwendeten CAD-Programms, mit dem der Benutzer die CAD-Zeichnungen verarbeitet. Diese benutzerspezifischen Daten zur IT-Umgebung des Benutzers können nämlich dann beim Lieferanten verwendet werden, um die vom Benutzer bestellte zeichnerische oder virtuelle Darstellung (CAD-Zeichnung) des ausgewählten Bauteils zu erzeugen. Die zeichnerische oder virtuelle Darstellung des ausgewählten Bauteils kann dadurch nämlich so erstellt werden, dass der Benutzer die übermittelte zeichnerische oder virtuelle Darstellung des Bauteils (CAD-Zeichnung) unmittelbar (ohne eine notwendige Konvertierung in ein anderes Datenformat) verwenden und mit dem von ihm eingesetzten CAD-Programm bearbeiten kann. Dies stellt eine erhebliche Vereinfachung dar, denn die meisten verfügbaren CAD-Programme weisen ein eigenes spezifisches Dateiformat auf, was den Datenaustausch zwischen verschiedenen CAD-Programmen erschwert.

Bei dem Lesegerät, mit dem der Produktcode eines ausgewählten Produkts und gleichzeitig das Identifikationsmittel des Benutzers ausgelesen werden, handelt es sich zweckmäßig um ein Handlesegerät. Insbesondere kann es sich bei dem Lesegerät um ein Smartphone handeln, welches zum Auslesen und Erkennen von maschinenlesbaren Codes, wie z.B. Barcodes oder QR-Codes, eingerichtet ist. Das Lesegerät ist zweckmäßig weiterhin so eingerichtet, dass es Texte mittels eines Texterkennungsverfahrens, wie z.B. OCR, erkennen und in ein elektronisches Textformat umwandeln kann. Dadurch ist gewährleistet, dass das Lesegerät gleichzeitig sowohl den maschinenlesbaren Produktcode als auch das ggf. in Textform oder ebenfalls als maschinenlesbarer Code gehaltene Identifikationsmittel auslesen und die ausgelesenen Daten (elektronisch und automatisiert) verarbeiten kann. Mobiltelefone der neuesten Generation (Smartphones) und sogenannte PDAs ("Personal Digital Assistants") verfügen häufig über eine eingebaute Kamera und eine Software, die das Auslesen und Dekodieren von maschinenlesbaren Codes sowie die Erkennung von Texten ermöglicht. Bei dem Lesegerät kann es sich jedoch auch um einen herkömmlichen Barcode-Scanner handeln, der zweckmäßig mit einem Computer gekoppelt ist, um die ausgelesenen Daten des Produktcodes des ausgewählten Produkts und des Identifikationsmittels verarbeiten und daraus eine Bestellung generieren zu können. Zweckmäßig ist das Lesegerät in jedem Fall in einer Datenverarbeitungseinrichtung, wie z.B. einem Smartphone oder einem Computer, enthalten oder mit einer solchen Datenverarbeitungseinrichtung gekoppelt, wobei in der Datenverarbeitungseinrichtung zweckmäßig ein Computerprogramm vorgesehen ist, welches die ausgelesenen Daten des Produktcodes und des Identifikationsmittels zusammenführt und unter Verwendung dieser Daten eine elektronische Bestellung generiert, welche dann über eine Datenverbindung, insbesondere eine Internet- oder Mobilfunkverbindung, an einen Anbieter des ausgewählten Produkts, welches dem eingelesenen Produktcode zugeordnet ist, übermittelt wird. Die bei dem Anbieter des ausgewählten Produkts eingehende Bestellung kann dort dann in bekannter Weise weiter verarbeitet werden, um eine Lieferung des bestellten Produkts an den Benutzer zu veranlassen oder um - wie bereits oben beschrieben - eine zeichnerische oder virtuelle Darstellung eines ausgewählten Bauteils an den Benutzer zu übersenden.

Das auf einem Prozessor der Datenverarbeitungseinrichtung ablaufende Computerprogramm ist gemäß eines Aspekts der Erfindung so ausgestaltet, dass es automatisiert ein Bestellverfahren auslöst, wobei zunächst in einem ersten Verfahrensschritt wenigstens ein maschinenlesbarer Produktcode, der einem ausgewählten und in einem Produktkatalog dargestellten Produkt zugeordnet ist und Informationen (Produktinformationen) zu dem Produkt enthält, zusammen mit einem Identifikationsmittel, welches individuelle Daten eines Benutzers (Benutzerinformationen) enthält, mittels eines Lesegeräts gleichzeitig ausgelesen wird, wobei das Lesegerät mit der Datenverarbeitungseinrichtung, auf der das Computerprogramm läuft, gekoppelt ist. In einem zweiten Schritt des automatisierten Bestellverfahrens wird schließlich durch das Computerprogramm eine elektronische Bestellung generiert, indem die ausgelesenen Daten des Produktcodes des ausgewählten Produkts und des Identifikationsmittels zusammengeführt werden. Die so von dem Computerprogramm erzeugte Bestellung wird dann zweckmäßig automatisiert auf elektronischem Wege über eine Datenverbindung an einen Lieferanten des ausgewählten Produkts versendet.

In einer abgewandelten Ausführungsform ist es auch möglich, zur Erzeugung einer Bestellung die ausgelesenen Daten des Produktcodes und des Identifikationsmittels zunächst in ein Bestellformular einzugeben, wobei diese Eingabe zweckmäßig automatisiert durch das Computerprogramm erfolgt. Das Bestellformular kann dann entweder von dem Benutzer ausgedruckt und auf herkömmlichem Wege, beispielsweise per Post oder per Telefax, an einen Lieferanten des ausgewählten Produkts versendet werden. Es ist jedoch auch möglich, ein auf diese Weise erzeugtes Bestellformular in elektronischer Form automatisiert über eine Datenverbindung, bspw. per Compuerfax oder E-mail oder SMS bzw. MMS, direkt an den Lieferanten zu übermitteln und zweckmäßig gleichzeitig dazu einen Ausdruck des Bestellformulars zu erzeugen, um dem Benutzer einen Beleg über die abgesandte Bestellung zur Verfügung zu stellen.

Diese und weitere Vorteile der Erfindung gehen aus den nachfolgend unter Bezugnahme auf die begleitenden Zeichnungen näher beschriebenen Ausführungsbeispielen hervor. Die Zeichnungen zeigen:
- **Fig. 1:**: Darstellung einer ersten Ausführungsform eines erfindungsgemäßen Produktkatalogs in aufgeklapptem Zustand;
- **Fig. 2:**: Darstellung der hinteren inneren Umschlagsseite des Umschlags des Produktkatalogs von Fig. 1;
- **Fig. 3:**: Schematische Darstellung eines erfindungsgemäßen Verfahrens zum automatischen Bestellen von in einem Produktkatalog dargestellten Produkten;
- **Fig. 4:**: Schematische Darstellung eines erfindungsgemäßen Verfahrens zum automatischen Bestellen und Übermitteln von CAD-Zeichnungen von in einem Produktkatalog dargestellten Bauteilen;
- **Fig. 5:**: Darstellung einer zweiten Ausführungsform eines erfindungsgemäßen Produktkatalogs in aufgeklapptem Zustand.

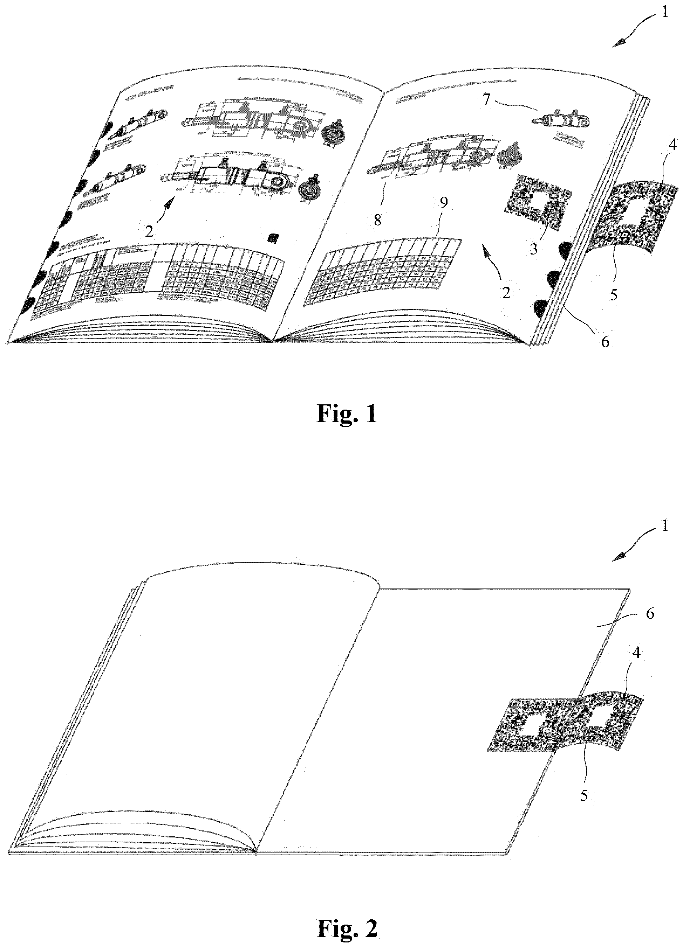

In Figur 1 ist ein erstes Ausführungsbeispiel eines erfindungsgemäßen Produktkatalogs in einem aufgeklappten Zustand gezeigt. In dem Produktkatalog 1, bei dem es sich in dem gezeigten Ausführungsbeispiel um einen gedruckten Produktkatalog handelt, ist eine Sammlung von Informationen zu Produkten, wie z.B. Waren, insbesondere Bauteile, oder Dienstleistungen enthalten. Die Darstellung 2 der Informationen zu den Produkten erfolgt dabei beispielsweise wie in dem zeichnerisch dargestellten Ausführungsbeispiel in Form einer Abbildung 7 des Produkts, einer technischen Zeichnung 8 und/oder textlichen Informationen 9 zu dem Produkt. In dem gezeigten Ausführungsbeispiel sind die textlichen Informationen in einer Tabelle enthalten und stellen bspw. technische Informationen zu dem dargestellten Produkt dar. Bei den textlichen Informationen kann es sich auch um eine textliche Beschreibung des Produkts oder andere Produktinformationen handeln, wie z.B. eine Bestell-oder Artikelnummer, den Preis, die Lieferzeit oder Lieferbedingungen oder dergleichen. Neben diesen Produktinformationen sind in dem Produktkatalog 1 zumindest für einzelne darin enthaltene Produkte ergänzend maschinenlesbare Produktcodes 3 dargestellt. Diese dem jeweiligen Produkt zugeordnete Produktcodes 3 können als eindimensionale Barcodes oder auch als zweidimensionale Codes ausgebildet sein. Bevorzugt handelt es sich bei dem maschinenlesbaren Produktcode 3 um einen QR-Code. In dem maschinenlesbaren Produktcode 3 sind Informationen (Produktinformationen) zu dem zugeordneten Produkt in codierter Form enthalten. Maschinenlesbare Codes, wie z.B. eindimensionale Barcodes oder zweidimensionale QR-Codes sind aus dem Stand der Technik bekannt und können mit einem geeigneten Lesegerät ausgelesen werden. Die Lesegeräte zum Auslesen von maschinenlesbaren Codes umfassen eine Einrichtung zum Einscannen des Codes sowie ein Datenverarbeitungsprogramm zum Dekodieren der in den Code enthaltenen Information. Der Produktcode 3 enthält beispielsweise Informationen zu dem ihm zugeordneten Produkt, welche eine Identifikation des Produkts ermöglichen und ggf. bereits in der Darstellung 2 enthalten sind, wie z.B. textliche Informationen 9 mit einer Artikel- oder Bestellnummer, einer textlichen Beschreibung des Produkts oder technische Zeichnungen 8. Darüber hinaus können auch noch weitere Informationen zu dem Produkt in dem Produktcode 3 enthalten sein. Besonders zweckmäßig enthält jeder Produktcode 3 eine Bestell- oder Artikelnummer zu dem ihm zugeordneten Produkt, die eine eindeutige Identifikation des Produkts ermöglicht.

In oder an dem Produktkatalog 1 ist ferner ein Identifikationsmittel 4 in Form eines maschinenlesbaren Benutzercodes angeordnet. Bei dem maschinenlesbaren Benutzercode 4 kann es sich ebenfalls um einen eindimensionalen Barcode oder um einen zweidimensionalen Code handeln. Bevorzugt ist der maschinenlesbare Benutzercode 4 ebenfalls als QR-Code ausgebildet. Gemäß der Erfindung ist der maschinenlesbare Benutzercode 4 so in oder an dem Produktkatalog 1 angeordnet, dass er zusammen mit wenigstens einem Produktcode 3 mittels eines geeigneten Lesegeräts 10 gleichzeitig auslesbar ist. Bei dem zeichnerisch dargestellten Ausführungsbeispiel der Figuren 1 und 2 ist dies dadurch realisiert, dass der Benutzercode 4 auf einer ausklappbaren Lasche 5 aufgedruckt ist, welche so in dem Produktkatalog 1 angeordnet ist, dass der Benutzercode 4 bei ausgeklappter Lasche 5 zusammen mit wenigstens einem in dem Produktkatalog 1 abgedruckten Produktcode 3 von einem geeigneten Lesegerät 10 gleichzeitig auslesbar ist. Das zeichnerisch dargestellte Ausführungsbeispiel eines erfindungsgemäßen Produktkatalogs 1 zeigt dabei einen Produktkatalog 1 in Buchform mit einem Einband (Umschlag), der einen Einbanddeckel 6 aufweist. Die ausklappbare Lasche 5 ist dabei wie in Figur 2 gezeigt an der Innenseite des rückseitigen Einbanddeckels 6 befestigt. Die Befestigung der ausklappbaren Lasche an dem Einbanddeckel 6 kann dabei beispielsweise durch Verkleben erfolgen. Besonders zweckmäßig ist es, wenn der Benutzercode 4 auf einer ausklappbaren Lasche 5 gedruckt ist, welche in entsprechender Weise an der Innenseite des Einbanddeckels 6 befestigt ist, wie in Figur 2 gezeigt. Die ausklappbare Lasche 5 kann dann, wenn der Produktkatalog 1 nicht verwendet und zur Aufbewahrung beispielsweise in ein Bücherregal gestellt wird, eingeklappt werden, so dass die Lasche seitlich nicht über die Außenkante des Einbands (Umschlags) des Produktkatalogs 1 hervorsteht. Dadurch wird eine Beschädigung der ausklappbaren Lasche 5 mit dem darauf aufgedruckten Benutzercode 4 verhindert, wenn der Produktkatalog nicht verwendet wird. Für eine bestimmungsgemäße Verwendung des erfindungsgemäßen Produktkatalogs kann die ausklappbare Lasche 5 dann wie in Figur 2 gezeigt ausgeklappt werden. In dieser Lage der ausklappbaren Lasche 5 ist der darauf aufgedruckte Benutzercode 4 bei geöffnetem Produktkatalog sichtbar, wie in Figur 1 zu sehen. Der Benutzercode kann alternativ auch in einem Reiter angeordnet sein, der zweckmäßig verschiebbar an dem Einbanddeckel oder einer Katalogseite des Produktkatalogs angeordnet ist.

In Figur 5 ist ein zweites Ausführungsbeispiel eines erfindungsgemäßen Produktkatalogs in einem aufgeklappten Zustand gezeigt. Bei diesem Ausführungsbeispiel ist das Identifikationsmittel 4 durch eine Visitenkarte 4' gebildet, welche benutzerspezifische Daten (Benutzerinformationen) zur Identifizierung des Benutzers in Textform enthält. Die auf der Visitenkarte 4' enthaltenen Daten (Benutzerinformationen) enthalten insbesondere den Namen des Benutzers und ggf. noch weitere Daten wie dessen Firma, seine Adresse, etc., die üblicherweise auf Visitenkarten zu finden sind.

In beiden Ausführungsbeispielen des erfindungsgemäßen Produktkatalogs enthalten die Identifikationsmittel, also der maschinenlesbare Benutzercode 4 oder die Visitenkarte 4', entweder in codierter Form oder in Textform individuelle Daten (Benutzerinformationen) eines Benutzers des Produktkatalogs 1, welche eine Identifizierung des Benutzers ermöglichen, wie z.B. den Namen und Adressdaten des Benutzers, oder eine Kundennummer. Zusätzlich können weitere benutzerspezifische Daten in dem Identifikationsmittel enthalten sein, bspw. Daten für eine bargeldlose Zahlung, wie z.B. Konto- oder Kreditkarteninformationen. Die in dem Identifikationsmittel und insbesondere in dem maschinenlesbaren Benutzercode 4 enthaltenen individuellen Benutzerinformationen können auch Konfigurationsdaten zu Datenverarbeitungsprogrammen oder der IT-Umgebung umfassen, die der Benutzer verwendet. In dem Benutzercode 4 können auch noch weitere individuelle Benutzerinformationen enthalten sein, wie z.B. besondere Liefer- oder Rabattbedingungen oder Daten zu Bonusprogrammen, welche dem spezifischen Benutzer des Produktkatalogs 1 zugeordnet sind.

Ein Benutzer des erfindungsgemäßen Produktkatalogs 1 kann sich seinen individuellen, auf seine Verwendung zugeschnittenen Produktkatalog 1 durch Erzeugen eines ihm zugeordneten Identifikationsmittels 4 und Anordnen des Identifikationsmittels 4 in dem Produktkatalog 1 wie oben beschrieben selbst gestalten. Der Benutzer erzeugt hierfür bspw. einen codierten und maschinenlesbaren Benutzercode 4, der seine individuellen Benutzerinformationen enthält. Geeignete Softwareprogramme zur Erzeugung solcher maschinenlesbarer Codes mit individuellen Daten sind aus dem Stand der Technik bekannt und im Markt erhältlich. Alternativ dazu kann der Benutzer auch eine Visitenkarte 4' als Identifikationsmittel 4 verwenden und in bzw. an dem Produktkatalog in der oben beschriebenen Weise anbringen. Sollten sich die individuellen Benutzerinformationen des Benutzers ändern, er also beispielsweise eine neue Adresse oder geänderte Liefer- oder Rabattbedingungen erhalten, kann der Benutzer seine ihm zugeordneten Identifikationsmittel 4 in entsprechender Weise auch ändern und bspw. seinen bisherigen Benutzercode 4 durch einen neuen, angepassten Benutzercode 4 ersetzen, indem er beispielsweise seinen neuen Benutzercode 4 auf eine ausklappbare Lasche 5 aufdruckt oder in einem Reiter anbringt und diese(n) in der oben beschriebenen Weise in dem Produktkatalog 1 anordnet.

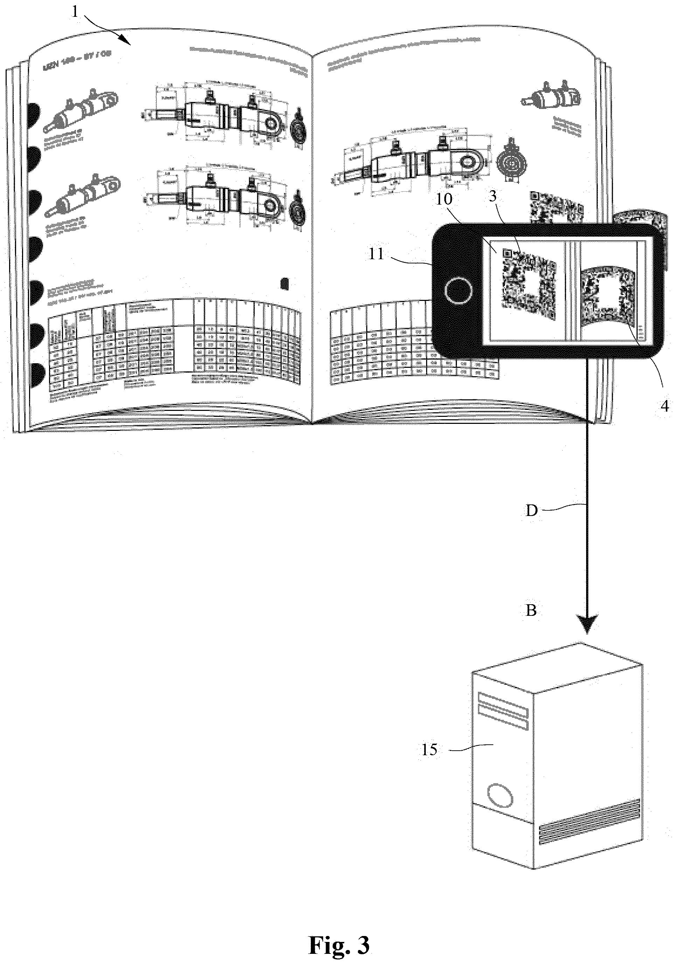

Bei einer Anordnung des Identifikationsmittels 4 in der beschriebenen und in den Figuren 1 und 5 gezeigten Weise, kann das Identifikationsmittel 4 zusammen mit einem Produktcode 3 mittels eines geeigneten Lesegeräts 10 gleichzeitig ausgelesen und zur Erzeugung einer Bestellung verwendet werden. Zur Erzeugung einer Bestellung eines Produkts durch den Benutzer bei einem Lieferanten, der das Produkt anbietet und liefern kann, wählt der Benutzer zunächst das zu liefernde Produkt aus und öffnet die Katalogseite, in der das ausgewählte Produkt in dem Produktkatalog 1 dargestellt ist. Enthält die Darstellung 2 des ausgewählten Produkts einen maschinenlesbaren Produktcode 3, kann dieser Produktcode 3 zusammen mit dem Identifikationsmittel 4 des Benutzers gleichzeitig ausgelesen werden, wenn beispielsweise das Identifikationsmittel 4 wie in den Figuren 1 und 5 gezeigt angeordnet ist (bei ausgeklappter Lasche 5 bzw. ausgeklappter Visitenkarte 4'). Zum automatisierten Generieren einer Bestellung kann der Benutzer dann mittels eines geeigneten Lesegeräts 10 den Produktcode 3 des ausgewählten Produkts und seine individuellen Identifikationsmittel 4 auslesen, indem er die Kamera bzw. die Scan-Einrichtung des Lesegeräts 10 auf den Benutzercode 3 des ausgewählten Produkts und das daneben liegende Identifikationsmittel 4 richtet und zweckmäßig gleichzeitig mit dem Lesegerät 10 ausliest, wie in Figur 3 gezeigt.

Bei dem Lesegerät 10 handelt es sich bevorzugt um ein Handlesegerät. Besonders bevorzugt kann ein Smartphone als Lesegerät 10 verwendet werden, welches über eine Kamera zum Auslesen maschinenlesbarer Codes (Barcodes oder QR-Codes) und Texte verfügt und die ausgelesenen Daten des Codes bzw. des ausgelesenen Texts mittels eines Datenverarbeitungsprogramms dekodieren, entziffern, umwandeln und ggf. weiter verarbeiten kann. Derartige Smartphones sind im Markt erhältlich. Alternativ kann es sich bei dem Lesegerät 10 auch um einen Code-Scanner, beispielsweise einen Barcode-Scanner handeln, der mit einer Datenverarbeitungseinrichtung 11, beispielsweise einem Computer, verbunden ist. Die Datenverarbeitungseinrichtung 11 enthält dabei das Computerprogramm, mit dem die ausgelesenen Daten eines maschinenlesbaren Codes dekodiert und mit dem ausgelesener Text mit einer Texterkennungssoftware (OCR-Software) erkannt und ggf. weiterverarbeitet werden können.

Das Computerprogramm zur Dekodierung eines maschinenlesbaren Codes, welches in der Datenverarbeitungseinrichtung 11 oder dem Smartphone auf einem Prozessor abläuft, dekodiert bzw. erkennt die ausgelesenen Daten des Produktcodes 3 des ausgewählten Produkts und der individuellen Identifikationsmittel 4 und führt diese Daten, welche Informationen zu dem ausgewählten Produkt (Produktinformationen) sowie individuelle Informationen zum Benutzer (Benutzerinformationen) des Produktkatalogs enthalten, zusammen und erzeugt daraus eine Bestellung. Zur Erzeugung der Bestellung kann in einer Ausführungsvariante vorgesehen sein, dass die ausgelesenen Daten des Produktcodes 3 und die Daten des individuellen Identifikationsmittels 4 in ein Bestellformular eingetragen werden. Der Benutzer kann das automatisiert von dem Computerprogramm erzeugte Bestellformular dann ausdrucken und beispielsweise per Post oder per Telefax an einen Lieferanten des ausgewählten Produkts versenden. Vorteilhafter ist allerdings, wenn das Bestellformular in elektronischer Form erzeugt und mittels einer Datenverbindung D, beispielsweise eine Internet- oder eine Mobilfunkverbindung, an einen Lieferanten des ausgewählten Produkts übermittelt wird, beispielsweise als E-mail, Computerfax oder als SMS/MMS. Der Lieferant kann die elektronische Bestellung B bspw. mittels eines Computers 15 empfangen und verarbeiten (Figur 3).

Die beim Lieferanten des ausgewählten Produkts eingehende Bestellung enthält in jedem Fall Informationen zu dem ausgewählten und bestellten Produkt (Produktinformationen) sowie zu dem Benutzer (Benutzerinformationen), weil die entsprechenden Produkt- und Benutzerinformationen einerseits in dem Produktcode 3 des ausgewählten Produkts und andererseits in dem individuellen Identifikationsmittel 4 des Benutzers (Bestellers) enthalten sind und in die Bestellung übernommen wurden. Anhand der Bestellung kann dann der Lieferant des ausgewählten Produkts dieses an den Benutzer (Besteller) übermitteln.

Das beschriebene Verfahren zum automatischen Bestellen von Produkten, die in dem Produktkatalog 1 dargestellt sind, zeichnet sich im Wesentlichen dahingehend durch eine Vereinfachung aus, dass der Benutzer bei der Erzeugung der Bestellung seine individuellen Benutzerinformationen und die Produktinformationen des ausgewählten Produkts nicht mehr einzeln und mühsam in eine Bestellung oder ein Bestellformular eingeben muss, sondern diese Daten auf einfache Art durch Einlesen eines Produktcodes des ausgewählten Produkts und seines individuellen Identifikationsmittels automatisiert in eine Bestellung übernehmen kann. Dieses Verfahren zeichnet sich durch eine geringe Fehlerquote aus, denn die Fehlerquote beim Einlesen maschinenlesbarer Codes durch geeignete Lesegeräte ist sehr gering. Besonders zweckmäßig ist es, wenn das Identifikationsmittel, bspw. der Benutzercode 4, Daten für eine bargeldlose Bezahlung des ausgewählten und bestellten Produkts umfasst. Dadurch kann gleichzeitig mit der Bestellung die Bezahlung des bestellten Produkts erfolgen, beispielsweise durch eine Einzugsermächtigung oder durch die Übermittlung von Kreditkartendaten, die in dem individuellen Benutzercode 4 enthalten sind.

Die Erfindung ist nicht auf die beschriebene Ausführungsform des Produktkatalogs 1 beschränkt. Bei dem Produktkatalog 1 kann es sich um alle möglichen Formen von gedruckten Produktkatalogen handeln. Darunter fallen insbesondere Produktkataloge in Buchform, jedoch auch Produktkataloge in Form von Broschüren, Flyern, Prospekten oder dergleichen. Die Erfindung beschränkt sich auch nicht auf die Verwendung eines gedruckten Produktkatalogs. Die Erfindung kann in entsprechender Weise auch bei einem elektronischen Produktkatalog angewandt werden, der beispielsweise auf einem Computerbildschirm zur Anzeige gebracht werden kann. Auch hier ist es möglich, einen benutzerspezifischen Benutzercode 4 oder eine elektronische Visitenkarte ebenfalls auf dem Bildschirm so zur Anzeige zu bringen, dass er/sie von einem geeigneten Lesegerät zusammen mit einem Produktcode 3 gleichzeitig ausgelesen werden kann.

In einem besonders zweckmäßigen Anwendungsfall der Erfindung können zeichnerische oder virtuelle Darstellungen von in einem Produktkatalog dargestellten Bauteilen in einem automatisierten Verfahren von einem Benutzer bestellt und an den Benutzer direkt übermittelt werden. In diesem Anwendungsfall handelt es sich bei den in dem Produktkatalog 1 dargestellten Produkten um technische Bauteile, wie z.B. mechanische oder elektronische Bauteile. Zeichnerische oder virtuelle Darstellungen solcher Bauteile werden beispielsweise in der Form von CAD-Zeichnungen in der rechnerunterstützten Konstruktion von Produkten verwendet. Das rechnerunterstützte Konstruieren von Produkten ist als "computer-aided design" (CAD) bekannt. Dabei werden zeichnerische bzw. virtuelle Darstellungen von Bauteilen in Form von CAD-Zeichnungen verwendet, um eine virtuelle Darstellung des zu konstruierenden Produkts zu erstellen. Die CAD-Zeichnungen enthalten dabei häufig neben den geometrischen Abmessungen und Daten der Bauteile auch noch weitere Informationen zu dem Bauteil, wie z.B. physikalische Eigenschaften und Materialparameter wie Masse, Dichte, Brechungsindex, elastische Eigenschaften, thermische und elektrische Eigenschaften und dergleichen. Solche CAD-Zeichnungen ermöglichen dadurch eine virtuelle Darstellung der Bauteile und eines aus den Bauteilen zusammengesetzten Endprodukts. Zur Erzeugung solcher CAD-Zeichnungen von Bauteilen und daraus zusammengesetzten Endprodukten existiert eine Vielzahl von spezifischen Softwareprogrammen (CAD-Programme), wobei diese Softwareprogramme auf verschiedenen Computer-Betriebssystemen lauffähig sind und jeweils unterschiedliche, systemspezifische Datenformate verwenden. Aufgrund der systembedingten Unterschiede der auf verschiedene Anwendungen zugeschnittenen SoftwareProgramme (CAD-Programme) sowie der verschiedenen Betriebssysteme und der systemspezifischen Datenformate ist häufig eine Datenkonvertierung notwendig, wenn z.B. eine CAD-Zeichnung eines Bauteils mit einem (anderen) CAD-Programm zur Konstruktion eines Endprodukts unter Verwendung dieses Bauteils Verwendung finden soll.

Zur Konstruktion eines Endprodukts bestellt ein Konstrukteur CAD-Zeichnungen von Bauteilen, aus denen das Endprodukt zusammengesetzt wird, bei einem Lieferanten des Bauteils. Zur Vereinfachung des Bestell- und Übermittlungsvorgangs und auch zur Vermeidung einer Datenkonvertierung der CAD-Zeichnung der Bauteile in ein anderes Datenformat, welches konform mit dem CAD-Programm des Benutzers (Bestellers) ist, kann ein erfindungsgemäßer Produktkatalog 1 Verwendung finden. Hierfür enthält der Produktcode 3, der in dem Produktkatalog 1 enthaltenen Bauteile die für eine Erstellung einer CAD-Zeichnung zu diesem Bauteil erforderlichen Informationen. Die individuellen Identifikationsmittel 4 des Benutzers enthalten in diesem Anwendungsfall zweckmäßig und ggf. ergänzend zu Benutzerinformationen, die den Benutzer identifizieren, spezifische Informationen zur IT-Umgebung des Benutzers, wie z.B. das Betriebssystem seiner Datenverarbeitungseinrichtung, auf der sein CAD-Programm läuft, die Programmbezeichnung und ggf. die Version des von ihm verwendeten CAD-Programms und ggf. darüber hinaus auch noch spezifische Konfigurationsdaten zu seiner Datenverarbeitungseinrichtung und seines CAD-Programms. Diese benutzerspezifischen Informationen können auch in einer Datenbank gespeichert sein, welche zweckmäßig beim Lieferanten der CAD-Daten des ausgewählten Bauteils hinterlegt ist und sie können über die Benutzerinformationen, die in dem Identifikationsmittel 4 enthalten sind und den Benutzer eindeutig identifizieren, aus der Datenbank ausgelesen werden.

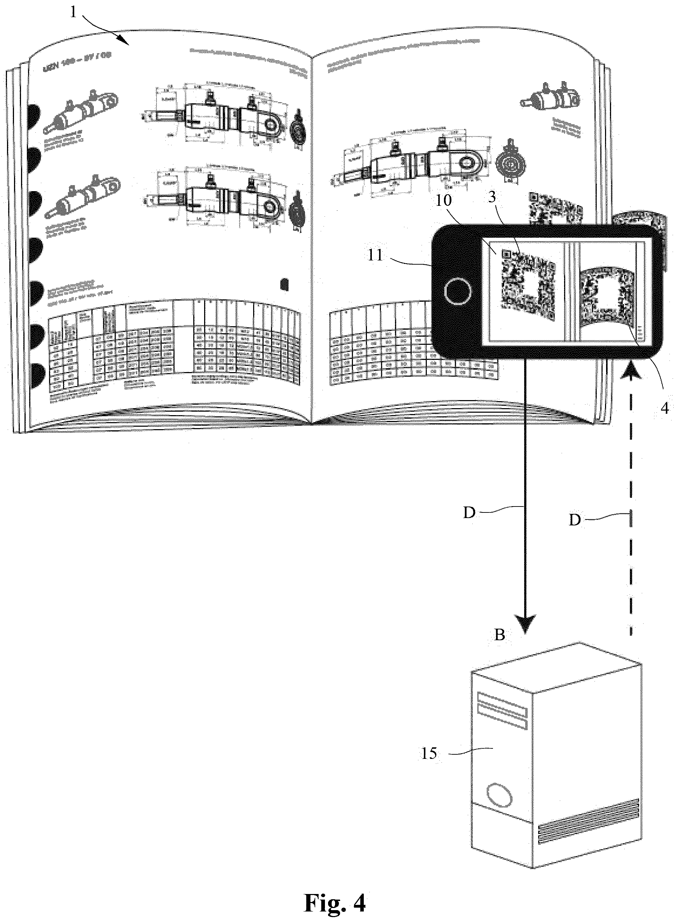

Zur Erzeugung einer Bestellung B einer CAD-Zeichnung eines von ihm ausgewählten Bauteils kann der Benutzer (Konstrukteur) dann, wie in oben beschriebener Weise, mittels eines geeigneten Lesegeräts 10 gleichzeitig den Produktcode 3 zu dem ausgewählten Bauteil und sein individuelles Identifikationsmittel 4 einlesen, wie in Figur 4 gezeigt. Das Computerprogramm des Lesegeräts 10 bzw. der mit dem Lesegerät 10 verbundenen Datenverarbeitungseinrichtung 11 führt die ausgelesenen Daten des Produktcodes 3 des ausgewählten Bauteils und des individuellen Identifikationsmittels zur Generierung einer Bestellung B einer CAD-Zeichnung des ausgewählten Bauteils zusammen, wobei die Bestellung B entsprechende Daten des Produktcodes 3 und des Identifikationsmittels 4 enthält. Insbesondere enthält die Bestellung B eine eindeutige Identifizierung des bestellten Bauteils (beispielsweise über eine Bestell- oder Artikelnummer) sowie eine Identifizierung des Benutzers und darüber hinaus benutzerspezifische Daten zu dem vom Benutzer verwendeten CAD-Programm, mit dem der Benutzer die CAD-Zeichnung des ausgewählten Bauteils darstellen und ggf. zur Konstruktion eines Endprodukts weiter verarbeiten möchte. Die so erzeugte Bestellung D wird zweckmäßig in elektronischer Form mittels einer Datenverbindung D an einen Lieferanten des ausgewählten Bauteils (bzw. einen Lieferanten einer CAD-Zeichnung zu dem ausgewählten Bauteil) übermittelt (Figur 4). Der Lieferant kann dann anhand der in der Bestellung B enthaltenen Daten zu dem ausgewählten Bauteil und der benutzerspezifischen Daten des Benutzers (Bestellers) eine auf die spezifischen Bedürfnisse des Benutzers (Bestellers) zugeschnittene Version der CAD-Zeichnung des ausgewählten Bauteils generieren, wobei zweckmäßig die im Identifikationsmittel, also beispielsweise im spezifischen Benutzercode enthaltene CAD-Software des Benutzers und etwaiger Versionen und Konfigurationen dieser Software, berücksichtigt werden. Die erzeugte CAD-Zeichnung (CAD) des ausgewählten Bauteils kann dann, bevorzugt wieder in elektronischer Form über eine Datenverbindung D, an den Benutzer (Besteller) versandt werden, wie in Figur 4 gezeigt. Der Benutzer (Besteller) ist in der Lage, die als CAD-Zeichnung übermittelte zeichnerische oder virtuelle Darstellung des ausgewählten Bauteils unmittelbar, d.h. ohne Datenkonvertierungen, mit seinem CAD-Programm anzuzeigen und weiter zu verarbeiten, da die übermittelte CAD-Zeichnung spezifisch auf das von ihm verwendete CAD-Programm und dessen Konfiguration zugeschnitten ist.

## Patentansprüche

1. Produktkatalog (1) in gedruckter Form mit einer Sammlung von Informationen zu Produkten, wobei die Darstellung (2) der Informationen zumindest für einzelne, in dem Produktkatalog enthaltene Produkte einen maschinenlesbaren Produktcode (3) umfasst, welcher Informationen zu dem Produkt enthält, und in oder an dem Produktkatalog (1) wenigstens ein maschinenlesbares Identifikationsmittel (4) mit individuellen Daten eines Benutzers des Produktkatalogs (1) zur Identifizierung des Benutzers angeordnet ist, **dadurch gekennzeichnet, dass** das Identifikationsmittel (4) auf einer ausklappbaren Lasche (5) aufgedruckt oder daran befestigt ist, welche so in oder an dem Produktkatalog (1) angeordnet ist, dass das Identifikationsmittel (4) bei ausgeklappter Lasche (5) zusammen mit wenigstens einem Produktcode (3) von einem Lesegerät (10) auslesbar ist.

2. Produktkatalog nach Anspruch 1, **dadurch gekennzeichnet, dass** es sich bei dem Produktcode (3) um einen Barcode oder um einen zweidimensionalen Code, insbesondere um einen QR-Code^{®} und/oder dass es sich bei dem Identifikationsmittel (4) um einen maschinenlesbaren Code, insbesondere einen Barcode oder einen QR-Code^{®}, oder um eine Visitenkarte des Benutzers handelt.

3. Produktkatalog nach Anspruch 1 oder 2, **dadurch gekennzeichnet, dass** das Identifikationsmittel (4) den Namen und Adressdaten des Benutzers und insbesondere seine e-mail-Adresse enthält.

4. Produktkatalog nach einem der voranstehenden Ansprüche, **dadurch gekennzeichnet, dass** das Identifikationsmittel (4) eine Kundennummer des Benutzers und/oder Daten für eine bargeldlose Zahlung und/oder Konfigurationsdaten zu Datenverarbeitungsprogrammen des Benutzers, insbesondere zu CAD-Programmen, enthält.

5. Produktkatalog nach einem der voranstehenden Ansprüche, **wobei** der Produktcode (3) und das Identifikationsmittel (4) während des Auslesens benachbart zueinander angeordnet sind..

6. Produktkatalog nach Anspruch 1, **dadurch gekennzeichnet, dass** der Produktkatalog (1) einen Einband mit einem Einbanddeckel (6) aufweist und dass die ausklappbare Lasche (5) an dem Einbanddeckel (6) befestigt ist.

7. Produktkatalog nach Anspruch 6, **dadurch gekennzeichnet, dass** die ausklappbare Lasche (5) verschiebbar an dem Einbanddeckel (6) befestigt ist.

8. Verfahren zum automatischen Bestellen von in einem gedruckten Produktkatalog (1) dargestellten Produkten durch einen Benutzer, wobei in der Darstellung (2) wenigstens eines der Produkte ein maschinenlesbarer Produktcode (3) dargestellt ist, welcher Informationen zu dem Produkt enthält, **gekennzeichnet durch** folgende Schritte:
- Bereitstellen eines gedruckten Produktkatalogs (1), welcher Produktcodes (3) zu den darin dargestellten Produkten sowie ein maschinenlesbares Identifikationsmittel (4) mit individuellen Daten des Benutzers zu dessen Identifizierung enthält, wobei das Identifikationsmittel (4) auf einer ausklappbaren Lasche (5) aufgedruckt oder daran befestigt ist, welche so in oder an dem gedruckten Produktkatalog (1) angeordnet ist, dass das Identifikationsmittel (4) bei ausgeklappter Lasche (5) gleichzeitig zusammen mit wenigstens einem Produktcode (3) von einem Lesegerät (10) auslesbar ist,
- Gleichzeitiges Auslesen wenigstens eines Produktcodes (3), der einem ausgewählten Produkt zugeordnet ist, und des Identifikationsmittels (4) mittels eines Lesegeräts (10), welches eine Datenverarbeitungseinrichtung (11) enthält oder an eine Datenverarbeitungseinrichtung gekoppelt ist,
- Zusammenführen der ausgelesen Daten des oder der Produktcodes (3) und des Identifikationsmittels (4) **durch** die Datenverarbeitungseinrichtung (11) zur automatisierten Erzeugung einer Bestellung, welche Daten des Produktcodes (3) und die Daten zur Identifizierung des Benutzers enthält.

9. Verfahren zum automatischen Bestellen und Übermitteln von zeichnerischen oder virtuellen Darstellungen, insbesondere von CAD-Zeichnungen, von in einem gedruckten Produktkatalog dargestellten Bauteilen, wobei in der Darstellung wenigstens eines der Bauteile ein maschinenlesbarer Produktcode (3) dargestellt ist, welcher Informationen zu dem Bauteil enthält, **gekennzeichnet durch** folgende Schritte:
- Bereitstellen eines gedruckten Produktkatalogs (1), welcher Produktcodes (3) zu den darin dargestellten Bauteilen sowie ein maschinenlesbares Identifikationsmittel (4) mit individuellen Daten des Benutzers zu dessen Identifizierung enthält, wobei das Identifikationsmittel (4) auf einer ausklappbaren Lasche (5) aufgedruckt oder daran befestigt ist, welche so in oder an dem gedruckten Produktkatalog (1) angeordnet ist, dass das Identifikationsmittel (4) bei ausgeklappter Lasche (5) gleichzeitig zusammen mit wenigstens einem Produktcode (3) von einem Lesegerät (10) auslesbar ist,
- Gleichzeitiges Auslesen wenigstens eines einem ausgewählten Bauteil zugeordneten Produktcodes (3) und des Identifikationsmittels (4) mittels eines Lesegeräts (10), welches eine Datenverarbeitungseinrichtung (11) enthält oder an eine Datenverarbeitungseinrichtung (11) gekoppelt ist,
- Zusammenführen der ausgelesen Daten des oder der Produktcodes (3) und des Benutzercodes (4) **durch** die Datenverarbeitungseinrichtung (11) zur automatisierten Erzeugung einer Bestellung einer zeichnerischen oder virtuellen Darstellung des dem ausgelesenen Produktcode (3) zugeordneten Bauteils, wobei die Bestellung Daten des Produktcodes (3) und des Benutzercodes (4) enthält,
- Erzeugen einer zeichnerischen oder virtuellen Darstellung des dem ausgelesenen Produktcode (3) zugeordneten Bauteils unter Verwendung der ausgelesenen Daten des Produktcodes (3) und der Daten zur Identifizierung des Benutzers,
- Übermitteln der erzeugten zeichnerischen oder virtuellen Darstellung des ausgewählten Bauteils an den Benutzer.

10. Verfahren nach einem der Ansprüche 8 oder 9, **dadurch gekennzeichnet, dass** die ausgelesenen Daten des Produktcodes (3) und die Daten zur Identifizierung des Benutzers zur Erzeugung der Bestellung von der Datenverarbeitungseinrichtung (11) in ein Bestellformular eingegeben werden.

11. Verfahren nach einem der Ansprüche 8 bis 10, **gekennzeichnet durch** den weiteren Verfahrensschritt des Absendens der Bestellung und insbesondere des Bestellformulars an einen Anbieter des ausgewählten Produkts bzw. Bauteils, welches dem ausgelesenen Produktcode (3) zugeordnet ist.

12. Verfahren nach einem der Ansprüche 8 bis 11, **dadurch gekennzeichnet, dass** der Produktcode (3) und das Identifikationsmittel (4) während des Auslesens benachbart zueinander angeordnet sind.

13. Verfahren nach einem der Ansprüche 8 bis 12, **dadurch gekennzeichnet, dass** es sich bei dem Lesegerät (10) um ein Handlesegerät und insbesondere um ein smartphone handelt, welches zum Auslesen und Erkennen von Barcodes und/oder QR-Codes und/oder zur Texterkennung eingerichtet ist.

14. Verfahren nach einem der Ansprüche 8 oder 9, **dadurch gekennzeichnet, dass** die Datenverarbeitungseinrichtung (11) mit einem Computerprogramm ausgestattet ist, welches die ausgelesenen Daten des oder der Produktcodes (3) und des Identifikationsmittels (4) zusammenführt und unter Verwendung dieser Daten eine elektronische Bestellung generiert, wenn das Computerprogramm auf einem Prozessor der Datenverarbeitungseinrichtung (11) ausgeführt wird, wobei die elektronische Bestellung über eine Datenverbindung (12), insbesondere eine Internet- oder Mobilfunkverbindung, an einen Anbieter des ausgewählten Produkts bzw. Bauteils übermittelt wird.

15. Computerprogrammprodukt, welches bei Ausführung durch einen Prozessor in einer Datenverarbeitungseinrichtung (11), insbesondere einem Computer oder einem Smartphone, bewirkt, dass der Prozessor ein Verfahren mit folgenden Schritten automatisiert ausführt:
- Gleichzeitiges Auslesen wenigstens eines maschinenlesbaren Produktcodes (3), der einem ausgewählten und in einem gedruckten Produktkatalog (1) dargestellten Produkt zugeordnet ist und Informationen zu dem Produkt enthält, und eines maschinenlesbaren Identifikationsmittels (4) mit individuelle Daten eines Benutzers zu dessen Identifizierung mittels eines Lesegeräts (10), welches mit der Datenverarbeitungseinrichtung (11) gekoppelt ist, wobei das Identifikationsmittel (4) auf einer ausklappbaren Lasche (5) aufgedruckt oder daran befestigt ist, welche so in oder an dem gedruckten Produktkatalog (1) angeordnet ist, dass das Identifikationsmittel (4) bei ausgeklappter Lasche (5) gleichzeitig zusammen mit wenigstens einem Produktcode (3) von dem Lesegerät (10) auslesbar ist,
- Zusammenführen der ausgelesenen Daten des oder der Produktcodes (3) und der Daten zur Identifizierung des Benutzers,
- Erzeugen einer Bestellung, welche Daten des Produktcodes (3) und die Daten zur Identifizierung des Benutzers enthält.

## Claims

1. Product catalog (1) in printed form, with a collection of information about products, wherein at least for individual products contained in the catalog, the presentation (2) of the information comprises a machine-readable product code (3), which contains information about the product, and at least one machine-readable identification means (4) with individual data of a user of the product catalog for identifying the user is arranged in or on the product catalog, **characterized in that** the identification means (4) is printed or fastened on a foldable flap (5), which is arranged in or on the product catalog (1) such that the identification means (4) can be read out together with at least one product code (3) by a reading device (10), when the flap (5) is expanded.

2. Product catalog according to Claim 1, **characterized in that** the product code (3) is a barcode or a two-dimensional code, particularly a QR code^{®} and/or that the identification means (4) is a machine-readable code, particularly a barcode or a QR code^{®}, or a business card of the user.

3. Product code according to Claim 1 or 2, **characterized in that** the identification means (4) contains the name and address data of the user, and in particular the user's e-mail address.

4. Product catalog according to one of the preceding claims, **characterized in that** the identification means (4) contains a customer number of the user and/or data for cashless payment and/or configuration data for data processing programs, particularly CAD programs, of the user.

5. Product catalog according to one of the preceding claims, **wherein** the product code (3) and the identification means (4) are proximate to each other during readout.

6. Product catalog according to Claim 1, **characterized in that** the product catalog (1) has a binding with a binding cover (6) and the foldable flap (5) is mounted on the binding cover(6).

7. Product catalog according to Claim 6, **characterized in that** the foldable flap (5) is mounted displaceably on the binding cover (6).

8. Method for automatic ordering of products presented in a product catalog (1) by a user, wherein a machine-readable product code (3) is presented in the presentation (2) of at least one of the products, which contains information about the product, **characterized by** the following steps:
- providing a printed product catalog (1), which contains product codes (3) for the products presented therein, and a machine-readable identification means (4) with individual data of a user for identifying the user, wherein the identification means (4) is printed or fastened on a foldable flap (5), which is arranged in or on the product catalog (1) such that the identification means (4) can be read out simultaneously together with at least one product code (3) by a reading device (10), when the flap (5) is expanded,
- simultaneous readout of at least one product code (3), which is assigned to a selected product, and the identification means (4) with a reading device (10), that contains a data processing device (11) or is coupled to a data processing device,
- combining the read-out data of the product code (3) or the product codes and the identification means (4) by the data processing device (11) for automatic generation of an order, which contains data from the product code (3) and the data for identifying the user.

9. Method for automatic ordering and transmission of graphical or virtual representations, in particular of CAD drawings, of components presented in a printed product catalog, wherein a machine-readable product code, that contains information about the component is presented in the presentation of at least one of the components, **characterized by** the following steps:
- providing a printed product catalog (1), which contains product codes (3) for the components presented therein and an identification means (4) with individual data of the user for identifying the user, wherein the identification means (4) is printed or fastened on a foldable flap (5), which is arranged in or on the product catalog (1) such that the identification means (4) can be read out simultaneously together with at least one product code (3) by a reading device (10), when the flap (5) is expanded,
- simultaneous readout of at least one product code (3), which is assigned to a selected component, and the identification means (4) with a reading device (10) that contains a data processing device (11) or is coupled to a data processing device,
- combining the read-out data of the product code (3) or the product codes and the user code (4) by the data processing device (11) for automatic generation of an order for a graphical or virtual representation of the component associated with the read-out product code (3), wherein the order contains data from the product code (3) and the user code (4),
- generating a graphical or virtual representation of the component associated with the read-out product code (3) using the read-out data from the product code (3) and the data for identifying the user,
- transmission of the generated graphical or virtual representation of the selected component to the user.

10. Method according to Claim 8 or 9, **characterized in that** the read-out data of the product code (3) and the data for identifying the user are entered by the data processing device (11) in an order form for generating the order.

11. Method according to one of Claims 8 to 10, **characterized by** the further method step of sending the order, and in particular the order form, to a provider of the selected product or component, which is associated with the read-out product code (3).

12. Method according to one of Claims 8 to 11, **characterized in that** the product code (3) and the identification means (4) are arranged adjacent to one another during the readout.

13. Method according to one of Claims 8 to 12, **characterized in that** the reading device (10) is a manual reading device and in particular a smartphone, that is equipped for reading out and recognizing barcodes and/or QR codes and/or for text recognition.

14. Method according to one of Claims 8 or 9, **characterized in that** the data processing device (11) is equipped with a computer program, that combines the read-out data of the product code (3) or the product codes and the identification means (4) and generates an electronic order using these data, when the computer program is executed on a processor of the data processing device (11), wherein the electronic order is transmitted via a data connection (12), in particular an Internet or mobile telephone connection, to a provider of the selected product or component.

15. Computer program product that, when executed by a processor in a data processing device (11), particularly a computer or a smartphone, causes the processor to automatically execute the following steps:
- simultaneous readout of at least one machine-readable product code (3), which is associated with a selected product contained in a printed product catalog (1) and contains information about the product, and a machine-readable identification means (4) with individual data of the user for identifying the user, by a reading device (10) that is coupled to the data processing device (11), wherein the identification means (4) is printed or fastened on a foldable flap (5), which is arranged in or on the product catalog (1) such that the identification means (4) can be read out by the reading device (10) simultaneously together with at least one product code (3), when the flap (5) is expanded,
- combining the read-out data from the product code (3) or the product codes and the data for identifying the user,
- generating an order, that contains data from the product code (3) and the data for identifying the user.

## Revendications

1. Catalogue de produits (1) sous forme imprimée avec une collection d'informations sur des produits, dans lequel la représentation (2) des informations au moins pour différents produits contenus dans le catalogue de produits comporte un code de produit (3) lisible par machine, qui contient des informations sur le produit, et, dans ou sur le catalogue de produits (1) est disposé au moins un moyen d'identification (4) lisible par machine avec des données individuelles d'un utilisateur du catalogue de produits (1) pour l'identification de l'utilisateur, **caractérisé en ce que** le moyen d'identification (4) est imprimé sur une languette rabattable (5) ou est fixé à cette dernière, qui est disposée ainsi dans ou sur le catalogue de produits (1), **en ce que** le moyen d'identification (4), lorsque la languette (5) est rabattue, peut être lu conjointement avec au moins un code de produit (3) par un appareil de lecture (10).

2. Catalogue de produits selon la revendication 1, **caractérisé en ce qu'**il s'agit quant au code de produit (3) d'un code à barres ou d'un code bidimensionnel, en particulier un code QR^{®} et/ou **en ce qu'**il s'agit quant au moyen d'identification (4) d'un code lisible par machine, en particulier un code à barres ou un code QR^{®}, ou d'une carte de visite de l'utilisateur.

3. Catalogue de produits selon la revendication 1 ou 2, **caractérisé en ce que** le moyen d'identification (4) contient le nom et des données d'adresses de l'utilisateur et en particulier son adresse de courrier électronique.

4. Catalogue de produits selon l'une quelconque des revendications précédentes, **caractérisé en ce que** le moyen d'identification (4) contient un numéro de client de l'utilisateur et/ou des données pour un paiement par virement et/ou des données de configuration pour des programmes de traitement de données, en particulier des programmes de CAO.

5. Catalogue de produits selon l'une quelconque des revendications précédentes, dans lequel le code de produit (3) et le moyen d'identification (4) sont disposés au voisinage l'un de l'autre durant la lecture.

6. Catalogue de produits selon la revendication 1, **caractérisé en ce que** le catalogue de produits (1) comprend une reliure avec un plat de reliure (6) et **en ce que** la languette rabattable (5) est fixée sur le plat de reliure (6).

7. Catalogue de produits selon la revendication 6, **caractérisé en ce que** la languette rabattable (5) est fixée déplaçable sur le plat de reliure (6).

8. Procédé de commande automatique de produits représentés dans un catalogue de produits imprimé (1) par un utilisateur, dans lequel dans la représentation (2) d'au moins un des produits est représenté un code de produit lisible par machine (3) qui contient des informations sur le produit, **caractérisé par** les étapes suivantes :
- la préparation d'un catalogue de produits imprimé (1), qui contient des codes de produit (3) pour les produits représentés dans le catalogue ainsi qu'un moyen d'identification (4) lisible par machine avec des données individuelles de l'utilisateur pour son identification, dans lequel le moyen d'identification (4) est imprimé sur une languette rabattable (5) ou est fixé à cette dernière, qui est disposée dans ou sur le catalogue de produits imprimé (1) de sorte que, lorsque la languette (5) est rabattue, le moyen d'identification (4) peut être lu simultanément conjointement avec au moins un code de produit (3) par un appareil de lecture (10),
- la lecture simultanée d'au moins un code de produit (3), qui est associé à un produit sélectionné, et du moyen d'identification (4) au moyen d'un appareil de lecture (10) qui contient un système de traitement de données (11) ou est couplé à un système de traitement de données,
- le regroupement des données lues du ou des codes de produit (3) et du moyen d'identification (4) par le système de traitement de données (11) pour la génération automatisée d'une commande qui contient des données du code de produit (3) et les données pour l'identification de l'utilisateur.

9. Procédé de commande automatique et de transfert de représentations graphiques ou virtuelles, en particulier de graphiques de CAO, de composants représentés dans un catalogue de produits imprimé, dans lequel, dans la représentation d'au moins un des composants est représenté un code de produit (3) lisible par machine qui contient des informations sur le composant, **caractérisé par** les étapes suivantes :
- la préparation d'un catalogue de produits imprimé (1) qui contient des codes de produit (3) pour les composants représentés dans le catalogue ainsi qu'un moyen d'identification (4) lisible par machine avec des données individuelles de l'utilisateur pour son identification, dans lequel le moyen d'identification (4) est imprimé sur une languette rabattable (5) ou est fixé à cette dernière, qui est disposée dans ou sur le catalogue de produits imprimé (1) de sorte que, lorsque la languette (5) est rabattue, le moyen d'identification (4) peut être lu simultanément conjointement avec au moins un code de produit (3) par un appareil de lecture (10),
- la lecture simultanée d'au moins un code de produit (3) associé à un composant sélectionné et du moyen d'identification (4) au moyen d'un appareil de lecture (10) qui contient un système de traitement de données (11) ou qui est couplé à un système de traitement de données (11),
- le regroupement des données lues du ou des codes de produit (3) et du code d'utilisateur (4) par le système de traitement de données (11) pour la génération automatisée d'une commande d'une représentation graphique ou virtuelle du composant associé au code de produit (3) lu, dans lequel la commande contient des données du code de produit (3) et du code d'utilisateur (4),
- la génération d'une représentation graphique ou virtuelle du composant associé au code de produit lu (3) à l'aide des données lues du code de produit (3) et des données pour l'identification de l'utilisateur,
- le transfert de la représentation graphique ou virtuelle générée du composant sélectionné à l'utilisateur.

10. Procédé selon l'une quelconque des revendications 8 ou 9, **caractérisé en ce que** les données lues du code de produit (3) et les données pour l'identification de l'utilisateur pour la génération de la commande par le système de traitement de données (11) sont indiquées dans un formulaire de commande.

11. Procédé selon l'une quelconque des revendications 8 à 10, **caractérisé par** l'autre étape de procédé comprenant l'envoi de la commande et en particulier du formulaire de commande à un fournisseur du produit ou du composant sélectionné, qui est associé au code de produit (3) lu.

12. Procédé selon l'une quelconque des revendications 8 à 11, **caractérisé en ce que** le code de produit (3) et le moyen d'identification (4) sont disposés au voisinage l'un de l'autre durant la lecture.

13. Procédé selon l'une quelconque des revendications 8 à 12, **caractérisé en ce qu'**il s'agit quant à l'appareil de lecture (10) d'un appareil de lecture portatif et en particulier d'un téléphone intelligent qui est conçu pour lire et reconnaître des codes à barres et/ou des codes QR et/ou pour la reconnaissance de tex-tes.

14. Procédé selon l'une quelconque des revendications 8 ou 9, **caractérisé en ce que** le système de traitement de données (11) est équipé d'un programme informatique qui regroupe les données lues du ou des codes de produit (3) et du moyen d'identification (4) et produit à l'aide de ces données une commande électronique lorsque le programme informatique est exécuté dans un processeur du système de traitement de données (11), dans lequel la commande électronique est transférée par le biais d'une liaison de données (12), en particulier une liaison par l'Internet ou une liaison de radiocommunication mobile, à un fournisseur du produit ou du composant sélectionné.

15. Produit de programme informatique qui, lors de son exécution par un processeur dans un système de traitement de données (11), en particulier dans un ordinateur ou dans un téléphone intelligent, fait en sorte que le processeur exécute de manière automatisée un procédé avec les étapes suivantes :
- la lecture simultanée d'au moins un code de produit (3) lisible par machine, qui est associé à un produit sélectionné et représenté dans un catalogue de produits imprimé (1) et qui contient des informations sur le produit, et d'un moyen d'identification (4) lisible par machine avec des données individuelles d'un utilisateur pour son identification au moyen d'un appareil de lecture (10) qui est couplé au système de traitement de données (11), dans lequel le moyen d'identification (4) est imprimé sur une languette rabattable (5) ou est fixé à cette dernière, qui est disposée dans ou sur le catalogue de produits imprimé (1) de sorte que, lorsque la languette (5) est rabattue, le moyen d'identification (4) peut être lu simultanément conjointement avec au moins un code de produit (3) par un appareil de lecture (10),
- le regroupement des données lues du ou des codes de produit (3) et des données pour l'identification de utilisateur,
- la génération d'une commande qui contient des données du code de produit (3) et les données pour l'identification de l'utilisateur.
